# EUROPEAN PATENT SPECIFICATION

(11) **EP 4 481 604 B1**
(45) Date of publication and mention of the grant of the patent: **22.04.2026**
(21) Application number: 23180523.5
(22) Date of filing: 21.06.2023
(51) Int. Cl.: G06F 21/57, G06F 21/74

(54) **TRUSTED EXECUTION ENVIRONMENT**
VERTRAUENSWÜRDIGE AUSFÜHRUNGSUMGEBUNG
ENVIRONNEMENT D'EXÉCUTION SÉCURISÉ

(43) Date of publication of application: 25.12.2024
(73) Proprietor: NIO Technology (Anhui) Co., Ltd, Hefei City, Anhui 230601 (CN)
(72) Inventor: BLAZEVIC, Borna, München (DE); PETER, Michael, München (DE)
(74) Representative: Vossius & Partner Patentanwälte Rechtsanwälte mbB

(56) References cited:
- US-A1- 2016 364 341
- US-B2- 10 742 603
- ZHICHAO HUA12 JINYU GU12 YUBIN XIA12 HAIBING GUAN2 1INSTITUTE OF PARALLEL AND DISTRIBUTED SYSTEMS ET AL: "vTZ: Virtualizing ARM TrustZone", 27 February 2021 (2021-02-27), pages 1 - 17, XP061054509, Retrieved from the Internet <URL:http://www.usenix.org/system/files/conference/usenixsecurity17/sec17-hua.pdf> [retrieved on 20230621]

## Description

The growing computing power of embedded systems has led to an increase in the use of general-purpose Operating Systems (OSs) such as Linux. However, the substantial attack surface arising from their complexity makes them unsuitable for safety- and security-critical use cases. Addressing this issue requires isolating the security-critical functionalities into separate execution environments and protecting them from the untrusted OS. Arm TrustZone (ARM TZ) applies this approach by partitioning the system into a secure world (SW) and non-secure world (NW), facilitating a Trusted Execution Environment (TEE) for the protection of security-critical functionality in the secure world. TrustZone, however, falls short when dealing with systems that virtualize multiple operating systems. Another approach to isolate functionality is employing a microkernel, such as the formally proven correct seL4 kernel, especially if it also offers virtualization functions. US 2016/0364341 A1 relates to a virtualisation-based platform protection technology.

Hence, current systems either employ a monolithic core of substantial size and complexity not suitable for performing secure applications or provide a secure and normal world that are not scalable or dynamically allocatable.

There is thus a need for a dynamic, scalable, flexible and secure environment. This need is met by the present disclosure.

The invention is specified by the independent claim. Preferred embodiments are defined in the dependent claims. In the following description, although numerous features may be designated as optional, it is nevertheless acknowledged that all features comprised in the independent claims are not to be read as optional.

The present disclosure relates to a system for providing a secure environment, the system comprising at least one processor. The at least one processor is configured to provide a system kernel, provide at least one virtual machine, VM, wherein the system kernel is configured to control at least one virtual machine monitor, VMM, wherein the VMM is configured to control at least one Trusted Execution Environment, TEE, in the at least one VM and a Rich Execution Environment, REE, in the at least one VM and to provide communication between the at least one TEE and the at least one VM and between the REE and the at least one VM. Each TEE comprises a trusted operating system, trusted OS, and at least one trusted application.

Various embodiments may preferably implement the following features.

Preferably, each TEE is configured to communicate with other TEEs and the REE.

Preferably, the VMM is an unprivileged entity with respect to system components except for one VM of the at least one VM.

Preferably, the VMM is configured to provide a virtual device management.

Preferably, the VMM is configured to control a plurality of TEEs in the at least one VM.

Preferably, the VMM is configured to provide a separate runtime environment for the TEE and the REE, respectively.

Preferably, the VMM is configured to provide a coordinated initialisation procedure compliant with security objectives for the TEE and the REE, respectively.

Preferably, the initialisation procedure is combined with a boot procedure executed in a coordinated manner.

Preferably, one or more memory range(s) is statically allocated to each TEE and the REE, respectively.

Preferably, one or more memory range(s) is dynamically allocated to each TEE and the REE, respectively.

Preferably, the VMM is configured to control at least one virtual Central Processing Unit, VCPU.

Preferably, a memory range of the TEE is configured not to be accessible by the REE, and a memory range of the REE is configured to be accessible by the TEE.

Preferably, the processor is configured to execute the VM in a normal state or in a secure state.

Preferably, the VMM is configured to control the at least one VCPU to selectively run in a normal state or a secure state.

Preferably, in the normal state, a memory region of the VM is divided into a normal memory region and a secure memory region, wherein the VCPU is only configured to access the normal memory region.

Preferably, in the secure state, the VCPU is configured to access all memory regions of the VM.

Preferably, the system kernel is a micro kernel.

Preferably, the processor is further configured to provide fine-grain access control for components of the system based on object capabilities.

Preferably, the processor is configured to provide a plurality of VMs, wherein the VMs are decoupled from one another such that the VMs are independently and repeatably instantiable and/or bootable.

Preferably, the processor is configured to perform a transition from the TEE to the REE or the REE to the TEE in the system kernel using the VMM, or the processor is configured to perform a transition from the TEE to the REE or the REE to the TEE in the system kernel without the VMM.

Preferably, the processor is configured to dynamically reconfigure the system.

Preferably, the dynamic reconfiguration comprises at least one of component creation, destruction, resource reclamation for future use, reconfiguration, privileges control, access control, memory allocation, or bandwidth allocation.

Other aspects, features, and advantages will be apparent from the summary above, as well as from the description that follows, including the figures and the claims.

The figures further define the present disclosure. Therein,
Fig. 1 shows a microkernel-based VM environment according to the prior art,
Fig. 2 shows a secure VM environment according to an embodiment,
Fig. 3 shows a boot schema according to an embodiment,
Fig. 4 shows an execution of a VM environment in a normal state and a secure state according to an embodiment,
Fig. 5 shows an execution of a VM environment having a plurality of TEEs in a normal state and a secure state according to an embodiment,
Figs. 6shows a flowchart of a switching sequence between REE and TEE according to an embodiment,
Figs. 7 show a flowchart of an accelerated switching sequence between REE and TEE according to an embodiment,
Fig. 8 shows a system architecture according to an embodiment,
Fig. 9 shows examples of isolating critical functions according to an embodiment,
Fig. 10 shows a system architecture according to an embodiment,
Fig. 11 shows virtualised and isolated Secure Worlds according to embodiments,
Fig. 12 shows a flowchart of handling an SMC issued by the NW to request execution in the SW and vice versa according to an embodiment, and
Fig. 13 shows SW and NW VSpaces according to an embodiment.

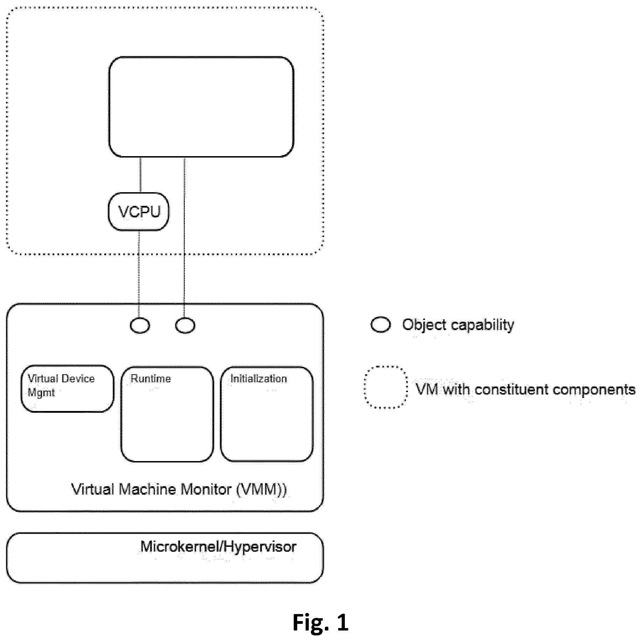

Fig. 1 shows an example of a virtual machine environment according to an example of the prior art. The environment, or system, comprises a (micro-)kernel acting as a hypervisor of the virtual machine (VM). A Virtual Machine Monitor (VMM) is provided for controlling the VM. The VMM comprises functions such as virtual device management (mgmt), runtime and initialisation. The VM, indicated by the dotted line in Fig. 1, comprises a virtual central processing unit (VCPU) and a memory object. The VMM controls VM components through object capabilities. This system, however, is not scalable and does not support addition of a Trusted Execution Environment (TEE) to a VM and therefore provides only limited functionality.

The present disclosure relates to a system for providing a secure environment, wherein the system comprises at least one processor. The at least one processor is configured to provide a system kernel and provide at least one virtual machine (VM). The system kernel is configured to control at least one virtual machine monitor (VMM). The VMM is configured to control at least one Trusted Execution Environment (TEE) in the at least one VM and a Rich Execution Environment (REE) in the at least one VM and to provide communication between the at least one TEE and the at least one VM and between the REE and the at least one VM.

The REE may also be referred to as an untrusted virtual machine space or Normal World (NW). The TEE may also be referred to as a trusted virtual machine space or Secure World (SW). As will be further described below, the system may preferably be based on a seL4 kernel and compatible with an Arm TrustZone (TZ) environment.

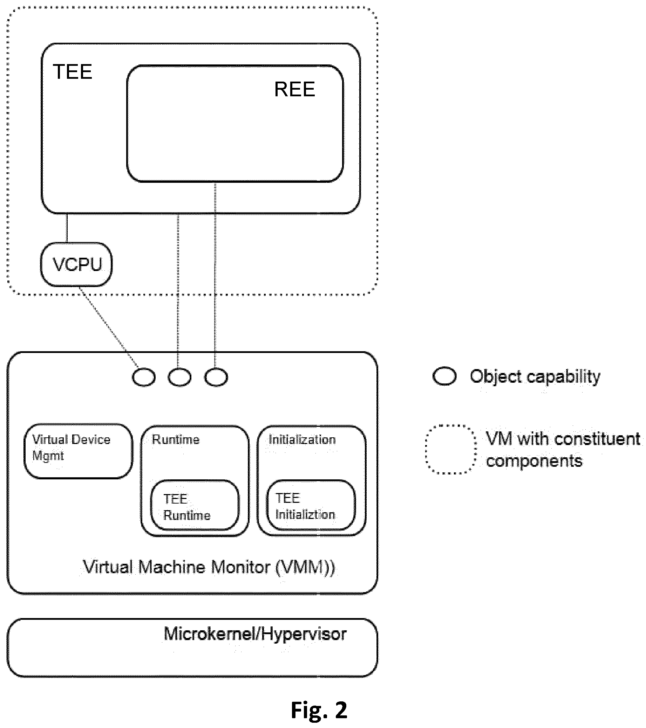

Fig. 2 shows a schematic overview of a system environment according to an embodiment. As evident from the figure, the system further comprises a separate TEE runtime function (SW runtime function) as well as a separate TEE initialisation function and thus provides a separate secure execution environment (TEE, SW) and normal execution environment (REE, NW).

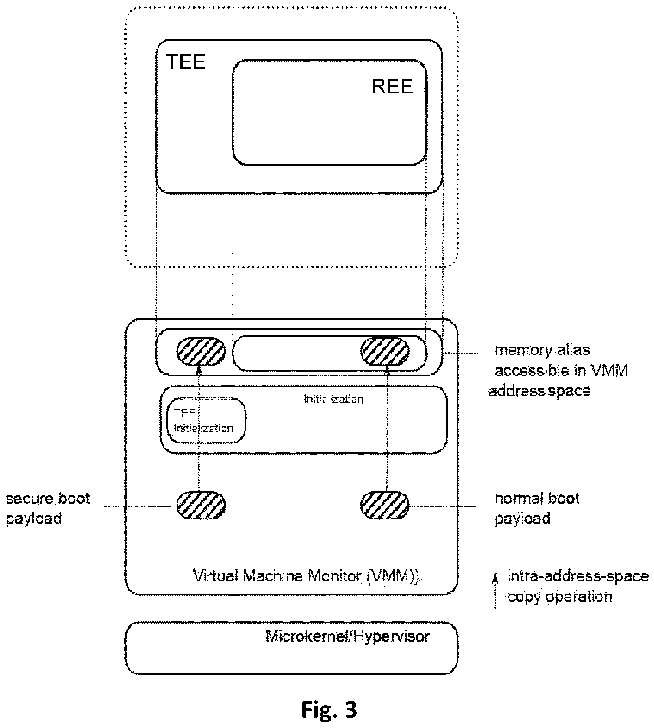

Fig. 3 refers to Fig. 2 and shows a schematic overview of booting a VM having a TEE and REE according to an embodiment.

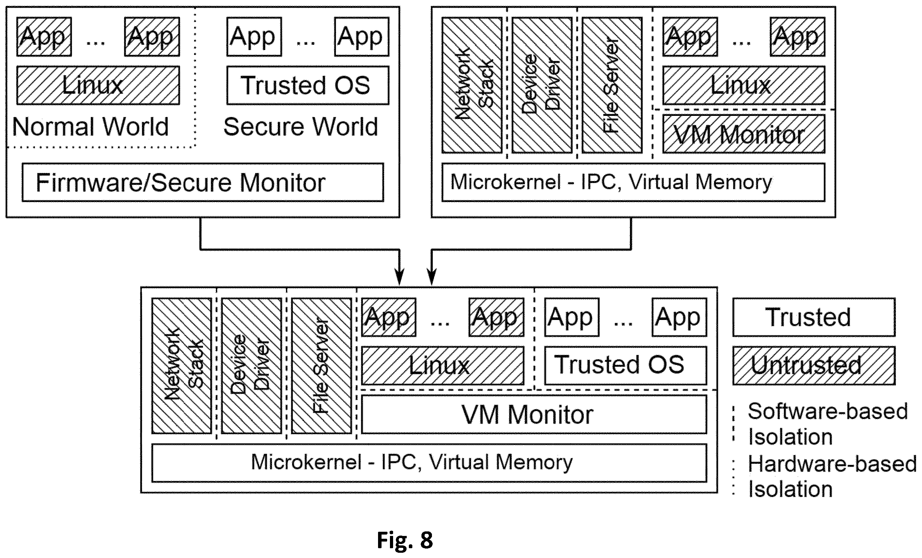

In an embodiment, each TEE comprises a trusted operating system, trusted OS, and at least one trusted application. Furthermore, each TEE may be configured to communicate with other TEEs and the REE. Each REE may comprise a rich operating system, rich OS, and at least one application (see also Fig. 8 to be described later).

In an embodiment, the VMM is an unprivileged entity with respect to system components except for one VM of the at least one VM. Generally, each VM may have its dedicated VMM. It may be advantageous not to share the VMM between a plurality of VMs since VM isolation and thus security may be higher. Alternatively, a VMM may also be associated to or support multiple VMs.

The VMM may be configured to provide a virtual device management. The VMM may be configured to provide extended runtime environment so as to allow secure interactions between TEE and REE (see Fig. 2).

The VMM may be configured to provide a coordinated initialization procedure compliant with security objectives of the system. In other words, the VMM may be configured to provide a separate initialisation environment for the TEE and the REE, respectively. In particular, the VMM may be configured to provide a coordinated initialisation procedure compliant with security objectives.

In an embodiment, the security objectives may include the following. The TEE boot artifacts may be of trusted provenance (i.e., cannot be overwritten in the course of a VM update). Also, in an embodiment, the TEE initialisation precedes the REE initialisation and takes place under correct isolation settings. That is, the TEE memory is non-accessible for the REE.

One or more memory range(s) may be statically allocated to each TEE and the REE, respectively. Alternatively, one or more memory range(s) may be dynamically allocated to each TEE and the REE, respectively. In an embodiment, two types of dynamic memory allocation by the TEE may be possible: from an external source and/or from the REE.

In an embodiment, memory is requested by the TEE and, once it has been handed over by the REE (or an external source), it cannot be revoked by the REE (or another entity) without the TEE's consent.

The VMM may be configured to control at least one virtual Central Processing Unit, VCPU.

The VMM may be configured to boot the TEE and the REE, preferably in a coordinated manner. In particular, the boot procedures of the TEE and the REE may be intertwined.

The boot procedure may comprise the following:
1. Provisioning of boot artifacts in a trustworthy fashion (both TEE, REE). Note that the system may allow user-controlled update of these. Preferably, it is made sure that only authorized parties can undertake these updates (i.e., an REE updated must not be able to overwrite the TEE boot artifacts). In an embodiment, the update of the REE may be allowed for untrusted parties. However, these updates may have no authority to (falsely) change the TEE boot artifacts. Updating the TEE artifacts may constitute a highly critical operation, which requires special privileges.
2. Setting up the isolation between TEE and REE.
3. Loading the artifacts and ensure that they are properly located in their respective ranges.
4. Update boot information (e.g., DTB) for the TEE initialisation and/or memory ranges and/or REE digests (hashsum of REE artifacts).
5. Transfer control to the TEE init subsystem. The TEE returns when its initialization is complete.
6. Transfer control to the REE init subsystem.

Thereafter, regular operations may be performed.

In an embodiment, a memory range of the TEE is configured not to be accessible by the REE, and a memory range of the REE is configured to be accessible by the TEE. That is the Normal World (NW/REE) is not allowed to have access to the Secure World (SW/TEE), but the Secure World may use resources of and have access to the Normal World.

The processor may be configured to execute the VM in a normal state or in a secure state. That is, the virtual CPU (VCPU) may operate in a normal or secure state. A memory region of the VM may be divided into a normal memory region and a secure memory region. The VCPU may only be configured to access the normal memory region in the normal state. In the secure state, the VCPU may be configured to access all memory regions of the VM.

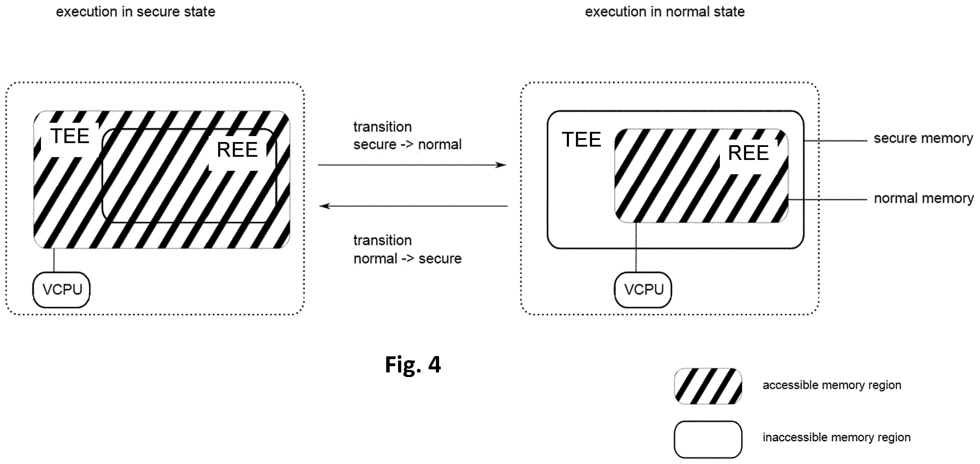

As shown in Fig. 4, in the normal state, the memory region of the TEE is inaccessible from the REE or for other applications. This ensures secure execution of certain applications and protection from potential threats. In the secure state, however, the VM is configured such that both the TEE and the REE may be accessible. The dotted line indicates the VM environment.

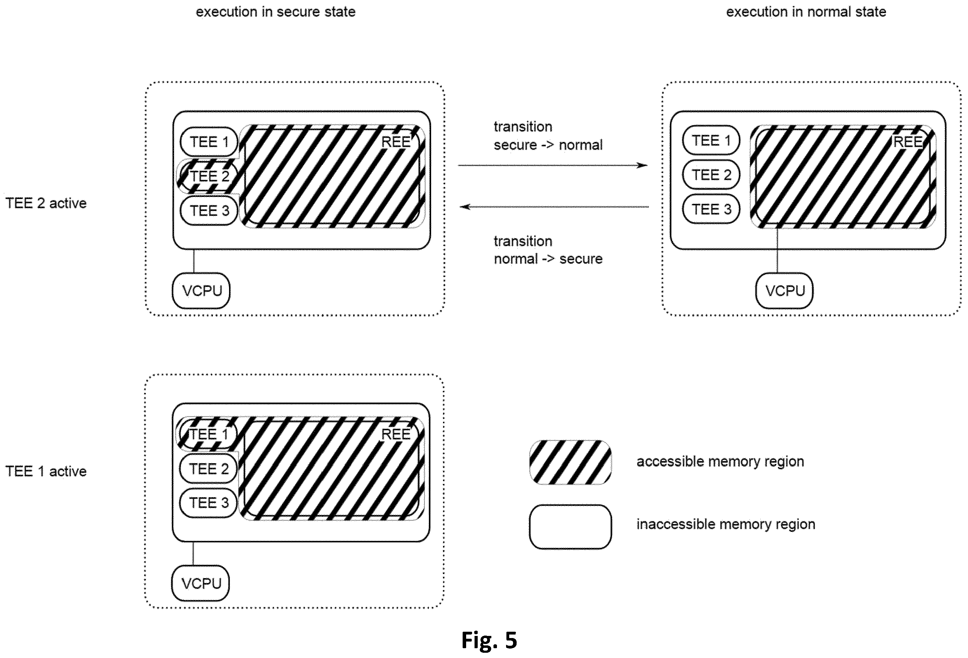

Fig. 5 shows the normal and secure states as also indicated by Fig. 4 but with a VM environment having a plurality of TEEs (TEE1, TEE2, TEE3). The provision of a plurality of TEEs may further improve security as the execution of different applications can be separated and the effect of an attack from one application to other applications can be minimised.

The system kernel may be a micro kernel. In particular, the system kernel may be based on a seL4 kernel as will be further described below.

In an embodiment, the processor is configured to provide a plurality of VMs, wherein the VMs are decoupled from one another such that the VMs are independently and repeatably instantiable and/or bootable. This includes, e.g., VM initialisation, destruction and resource reclamation (for future use).

In an embodiment, the processor is further configured to provide multiple, isolated TEEs in a VM. This is also shown in Fig. 5.

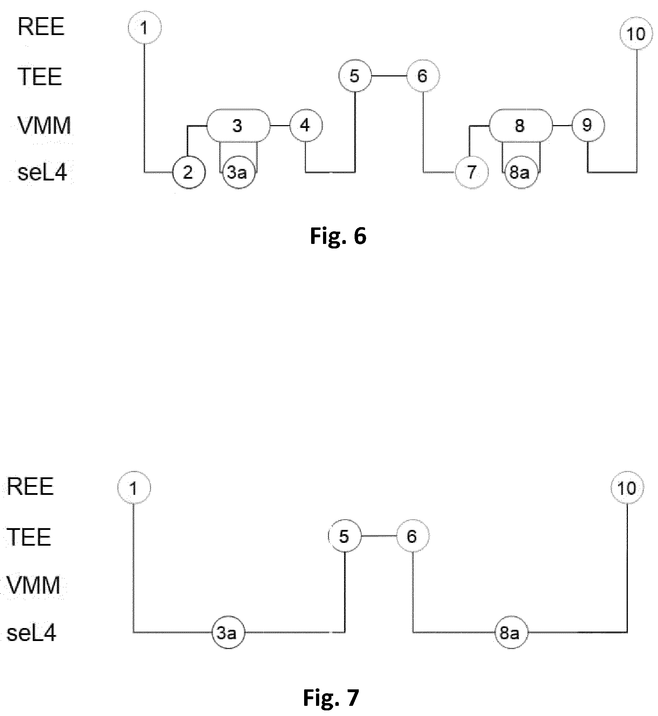

Fig. 6 is a flow chart of switching execution between an REE and a TEE and vice versa. The numbers in circles in Fig. 6 correspond to the respective steps S described in the following, e.g. the number 1 in the circle in Fig. 6 is referred to as S1 in the following.

The REE initiates a transition by executing a Secure Monitor Call (SMC) and transition into seL4 (kernel) is performed (S1). The seL4 generates a fault message to the VMM and transition to VMM is performed (S2). The VMM reconfigures the VM security configuration (S3). The reconfiguration involves seL4 syscalls (S3a). The VMM resumes the vCPU execution, transition through seL4 is performed (S4). Execution is resumed in the TEE (S5). For the reverse process, the steps are similar. The TEE initiates a transition by executing a Secure Monitor Call (SMC) and transition into seL4 (kernel) is performed (S6). The seL4 generates a fault message to the VMM and transition to VMM is performed (57). The VMM reconfigures the VM security configuration (S8). The VM announces or transmits the changes to seL4 (S8a). The VMM resumes the vCPU execution, transition through seL4 is performed (S9). Execution is resumed in REE (S10).

In an embodiment, the processor is further configured to perform a transition from a TEE to an REE in the system kernel (microkernel) without involvement of the VMM.

Fig. 7 shows a flowchart of an accelerated switching process without involvement of the VMM. The numbers in circles in Fig. 7 correspond to the respective steps T described in the following, e.g. the number 1 in the circle in Fig. 7 is referred to as T1 in the following.

The REE initiates a transition by executing a Secure Monitor Call (SMC) and transition into seL4 (kernel) is performed (T1). The seL4 reconfigures the VM security configuration using settings provided by the VMM, preferably as a pre-configuration (T3a). Execution is resumed in the TEE (T5). For the reverse process, the TEE initiates a transition by executing a Secure Monitor Call (SMC) and transition into seL4 (kernel) is performed (T6). The seL4 reconfigures the VM security configuration using settings provided by the VMM, preferably as a pre-configuration (T8a). Execution is resumed in the REE (T10).

In an embodiment, the system may further comprise one or more of the following general system properties. The system may provide fine-grain access control for components based on object capabilities. Fine-grain access may refer to controlling only isolated components of the system. In dynamic systems, access control may be difficult if the principle of least authority (POLA) shall be obeyed, which may be remedied by the present disclosure. Moreover, the system may support dynamic reconfiguration. This may in particular comprise at least one of component creation, destruction, or reconfiguration (incl. privileges/access control, resource allocation (memory, bandwidth)).

The above will be further described using the following example. In this particular example, the system kernel may be a seL4 microkernel, while the TEE may be a TrustZone or TrustZone compatible environment [33].

Embedded systems, from smartphones and routers to smart vehicles, are increasingly running versatile general-purpose OSs like Linux [1]. Linux is a well-known open-source kernel that offers extensive functionality, mature technology, broad hardware compatibility, and a rich collection of available software applications. These attributes have made it an attractive choice for domains with high demands for safety and security, such as the automotive [1] and space industries [2].

However, like other general-purpose OSs, the complexity of Linux can render it vulnerable to attacks, especially when it is connected to the internet [3]. Moreover, Linux was not originally designed with security and safety-critical applications in mind. To enhance the security of systems relying on complex OSs such as Linux, it is necessary to isolate security-sensitive applications from the general-purpose OS and its other applications.

A Trusted Execution Environment (TEE) is a separated execution environment running alongside a general-purpose OS, also designated the Rich Execution Environment (REE), and is responsible for protecting assets and executing trusted and security-critical code isolated from any threats that exist in the potentially compromised REE [3] [4]. Arm TrustZone is a hardware-based security technology that allows the creation of a TEE by providing hardware-based partitioning of the system into two isolated environments: Secure World (SW) and Normal World (NW), to represent the TEE and REE respectively, as shown in Fig. 8. Fig. 8 shows a system architecture according to the present disclosure (which may also be referred to as a TEEVseL4 system architecture), leveraging microkernel (seL4) as shown on the top right corner and Arm TrustZone-compatible software solutions as shown in the top left corner, in order to provide a virtualization system with a TrustZone-compatible TEE for secure isolation of security-critical functions. In other words, the top left and top right blocks may form the basis of the proposed system architecture as indicated by the arrows.

This above functionality allowed TrustZone to become an industry standard for providing a TEE in mobile devices [5]. Despite its widespread use, TrustZone has many limitations. Due to the limit of two hardware-enforced partitions, TrustZone does not provide component isolation within its TEE but leaves this to be implemented in its TEE kernels. Systems relying on TrustZone have been successfully attacked through vulnerable, third-party, and Trusted Applications (TAs) [5] [6]. In addition, TrustZone does not account for virtualization of multiple NW operating systems as virtualization in the secure world is not supported in the majority of existing systems.

Virtualization is a technology that has been widely adopted in embedded systems as a means of providing high-level isolation for safety and security-critical purposes [7] [8]. Virtualizing TEEs in the NW using a trustworthy hypervisor can address the issues of TrustZone. However, not all hypervisors are suitable for this purpose. Commodity hypervisors that include a management Virtual Machine (VM) (e.g., Xen) or host OS (e.g., KVM) have large codebase complexities that expose a large attack surface. As a result, these hypervisors are unsuitable for providing a TEE for many systems [8] [9]. Creating a trusted hypervisor with a trusted codebase and a small-attack surface is also a widely researched topic [8]-[10]. Microkernel-based hypervisors are another way of using virtualization to provide isolation for security and safety-critical applications in embedded systems. Microkernels are operating system kernels that offer functionalities like address space isolation, threads and Inter-Process Communication (IPC), within a small codebase [11] [12]. As such, they are a good basis for systems that aim to decompose the NW into components smaller than virtual machines by extracting system components and isolating them into small execution environments, thus ensuring that the system components work independently from each other [13]. Microkernel-based hypervisors, like seL4 [14], Nova [10] or Fiasco [15] also provide hypervisor functionality to enable code reuse by virtualizing general-purpose OSs like Linux alongside the rest of the decomposed system. These microkernel-based hypervisors can be used as trusted hypervisors to provide TEEs to the virtualized general-purpose OSs, addressing the issues of Arm TrustZone [9] while providing functionality reuse to the microkernel-based OS. seL4, in particular, offers a quality basis for creating a decomposed system, following the Principle of Least Authority (POLA) that allows for scalable and fine-grained isolation of the security-critical from non-critical system components [16] [14].

Furthermore, seL4 can benefit from all of the functionality offered in a NW by securely virtualizing general-purpose OSs like Linux. Nevertheless, while seL4 systems allow for extracting security-critical functionality into isolated components in user-space, seL4-based systems do not provide a way for re-using Arm TrustZone compatible security solutions for securing their virtualized guests.

To address the challenge of isolating security functionalities in protected components suitable for safety and security-critical systems like the automotive system, a set of critical requirements has been identified. These requirements aim to ensure that any proposed approach can meet the rigorous demands of such systems in terms of both security while still offering extensive functionality.

**Virtualization of multiple Linux guests:** The system may be able to reuse Linux functionality without compromising the rest of the requirements, ensuring compatibility with existing software solutions and minimizing the need for additional development efforts. Furthermore, the system may be able to virtualize multiple Linux guests to accommodate dividing functionality in separate VMs.

**Scalable system architecture:** Fine-grained decomposition: The system may allow to decompose critical functionality into sufficiently small components. Non-critical components may have more flexibility with their Trusted Computing Base (TCB), allowing for a good functionality-security trade-off. Support for POLA: The system may provide an access control mechanism that allows to approximate POLA - all components should only have access to resources or functionality necessary for their proper function, preventing unauthorized access and minimizing the potential for security breaches. Dynamic system: The system may support runtime reconfiguration, i.e., allow for the creation and destruction of components, including Linux VMs, based on current system needs.

**Security Services for Linux Guests:** The system may be able to provide an isolated execution environment that can provide security services to the virtualized Linux comparable to the Arm TrustZone security solution, ensuring that Linux guests are adequately protected against potential security threats.

**Arm TrustZone compatibility:** The system may be able to reuse existing Arm TrustZone software solutions in its isolated execution environment to provide security services to the Linux guest, ensuring compatibility with existing security infrastructures and minimizing the need for additional development efforts.

As indicated above, the proposed system architecture according to the present disclosure (TEEVseL4), which was designed to meet all the set requirements, may be used.

This seL4-based virtualization system may be extended with the ability to provide a TrustZone-compatible security extension to its virtualized guests.

In particular, TEEVseL4, a TrustZone-compatible virtualization system leveraging the strengths of the seL4 microkernel that can provide security services to the Linux guests by virtualizing a mature and widely used TEE OS, Open Portable Trusted Execution Environment (OP-TEE) [17], may be used.

### Trusted Execution Environment (TEE)

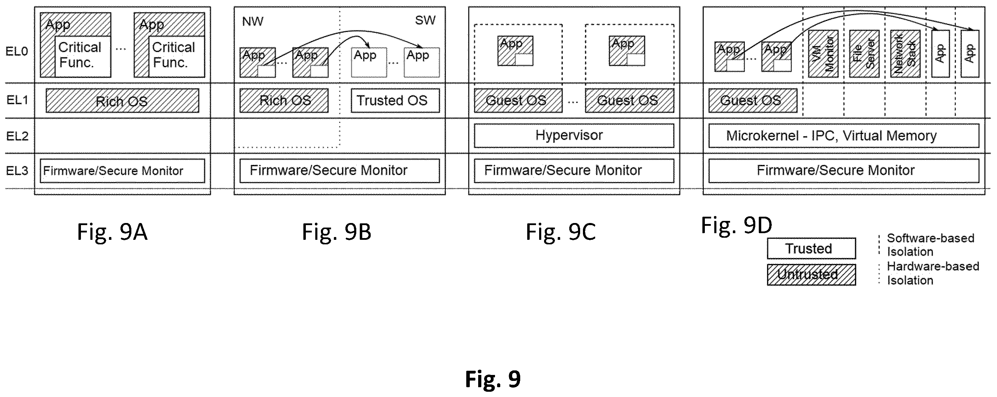

OSs reduce the attack surface of the system using process isolation to limit the attack-surface to individual processes. However, with growing complexity, OSs themselves become vulnerable to attacks [6]. Thus, as shown in Fig. 9, it becomes crucial to isolate the security-critical components from the untrusted OS [6]. This problem led to efforts in providing an isolated environment intended for secure execution of sensitive code [4]. A TEE is a separate and isolated execution environment running alongside the main operating system. A TEE is responsible for the protection of its assets against software attacks and it is possible to implement it using various technologies that provide different security properties [4]. Even though the world of TEEs is heterogeneous and the term TEE has multiple definitions, the provided definition is good enough as a basis of exploring the world of TEEs.

Fig. 9A shows that general-purpose OSs may have at least one critical functionality that needs to be isolated from the rest of the untrusted OS. Different technologies may be used to address this like Arm TrustZone (Fig. 9B), virtualization (Fig. 9C) or microkernels (Fig. 9D) to provide systems with different security properties.

### Arm TrustZone

Arm TrustZone has provided security primitives for accommodating TEEs [5]. As shown in Fig. 9B, the core idea of Arm TrustZone is partitioning the system into two worlds: NW and SW, allowing for strong isolation between the untrusted and trusted components [5]. The trusted, security-sensitive components are supposed to be moved to the SW, and the untrusted components remain in the NW The interaction between the two worlds is mediated by the highest privileged system component- the Secure Monitor [5].

To achieve this, TrustZone introduces a Non-Secure (NS) bit in the Secure Configuration Register (SCR) of the processor. The value of this register is propagated throughout the system including the memory and bus controllers. The NS bit marks whether the current execution is done in the secure or non-secure world (0 for SW 1 for NW) [5].

The Arm architecture defines four exception levels (EL): (1) EL0: user/application level. (2) EL1: (OS) kernel level. (3) EL2: optional, hypervisor level. (4) EL3: optional, Secure Monitor level. Arm TrustZone adds two flavors to EL0 and EL1: (i) S-EL0: secure user/application level. (ii) S-EL1: secure (OS) kernel level. The Secure Monitor (running in EL3) facilitates transitions between the two worlds by updating the security status, NS-bit in SCR EL3 [5]. A world switch is initiated by executing the Secure Monitor Call (SMC) instruction in (S-)EL1, which transfers control to the Secure Monitor in EL3 [5]. Many systems use Arm's Arm Trusted Firmware (ATF), which includes a Secure Monitor implementation, in addition to other system-level services such as Power State Coordination Interface (PSCI) [18] and Software Delegated Exception Interface (SDEI) [19]. The access to firmware services involves SMC calls, which are governed by the SMC Calling Convention (SMCCC) [20].

### TEE Kernels

As shown in Fig. 9B, software running in the SW is called a trusted kernel or trusted OS and is responsible for providing secure services and allows for the execution of security-sensitive applications. However, this trusted kernel is not a part of ATF, but is left to the system provider to implement. There are many options for a trusted kernel, from closed-source proprietary solutions, to open-source trusted kernels. The following will relate to OP-TEE, which is an open-source, GlobalPlatform compliant TEE kernel designed to run in parallel with a REE OS while leveraging Arm TrustZone hardware isolation mechanisms [17] [21]. OP-TEE has a small TCB with a suitable functionality set. While this is true for other GlobalPlatform compliant TEE kernels like Trusty and Open-TEE, OP-TEE is the only TEE kernel with integrated support in both mainline Linux and ATF. Furthermore, OP-TEE was designed with portability in mind and it does not rely on Arm TrustZone functionality directly which enables OP-TEE to use isolation providers different than Arm TrustZone. OP-TEE consists of three main components [17]:
- OP-TEE OS: The actual TEE kernel running at S-EL1 responsible for providing isolation between TAs, managing exceptions, shared memory allocation, providing secure storage and cryptography primitives.
- OP-TEE Client: The userspace framework consisting of the TEE Supplicant and the OP-TEE client library, running at EL0, that enables interaction between userspace untrusted applications and the OP-TEE Driver.
- OP-TEE driver: a crucial component, running at EL1, responsible for communication between the userspace apps and the TEE. OP-TEE driver forwards the userspace requests to the TEE and collects TEE requests and makes them available to the userspace.

### Virtualization

In cloud computing infrastructure, virtualization is a way of running multiple (guest) operating systems without the need for high availability of workloads, workload balancing, sandboxing applications that can interfere with the rest of the underlying machine [22]. In embedded devices, virtualization can also be adopted as a security measure. Virtualization can provide spatial and temporal isolation for different processes and functions by separating (decomposing) the system into isolated VM based execution environments, as shown in Fig. 9C. The software entity responsible for decoupling the virtualized OS from hardware, isolating it from other software components, scheduling its execution alongside other system components is called a hypervisor [22]. Hypervisors may be divided into two types [22] [23].

A standalone or Type 1 hypervisor is a hypervisor that runs directly on system hardware and completely controls all system hardware and resources (e.g., Xen, seL4). A hosted or Type 2 hypervisor is a hypervisor that runs as a part of an OS that completely controls all system hardware and resources and the hypervisor (e.g., QEMU, Oracle VM VirtualBox, KVM).

### Microkernels

Microkernels are operating system kernels that differ from more common general-purpose monolithic kernels (e.g., Linux) in that they provide only basic functionality like address-space based isolation, threads and thread scheduling and IPC [11] [12]. In comparison to monolithic kernels, microkernels cast out all other operating system features from privileged kernel-space to unprivileged user-space. With this design, microkernels drastically reduce their TCB and the attack-surface of the privileged code, while allowing the rest of the OS to be tailored for the target application [14]. Furthermore, because microkernels enforce component isolation, units like drivers, file systems and network stacks that are integral parts of monolithic kernels can be isolated into separate components that communicate through the microkernel.

Even though microkernels offer a quality base for constructing a safety and security-critical oriented decomposed system, they offer no direct support for the features removed from the kernel-space that like device drivers, file-systems and network stacks. Since they are needed for a general-purpose OS (as shown in Fig. 9D), microkernels may use virtualization to solve this problem as they can be used as microkernel-based hypervisors [14] [10]. This allows the system to leverage the functionality of a virtualized general-purpose OS (e.g., Linux) as just one of the isolated components in the system.

### Principle of Least Authority (POLA)

A system that can prevent a failure of one component from influencing the behavior of other system components is desirable in industries with security and safety-critical applications like the automotive industry [11]. To achieve this property, it is necessary to ensure that the components are truly isolated and independent from each other by designing the system with the POLA in mind [24]. When a system is designed in accordance with POLA every component has only the minimum set of privileges necessary to complete its function [1]. Capability-based access control models are a strong way to achieve a system that enforces POLA, through its use of capabilities forge-proof references to kernel resources that also contain a component's access right to those resources [1] [14]. These capability access control-based systems allow for a fine-grained-access control of kernel resources allowing for creation of a system that enforces POLA [1] [14].

As indicated above, the present disclosure will be further described using seL4 as a base system.

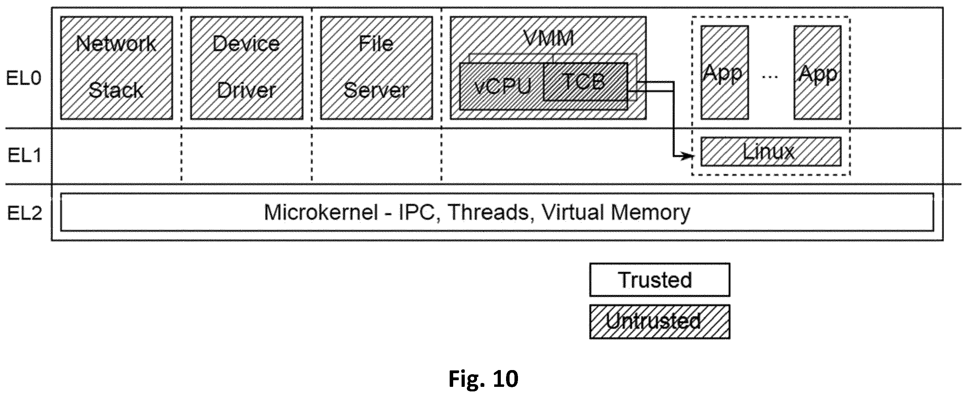

Fig. 10 shows a seL4 base system capable of virtualizing Linux as unprivileged isolated component alongside isolated native apps. In an seL4, the VM running is represented by a VSpace (represented with dashed lines), associated with a vCPU and a TCB (association represented with a directional line).

seL4 can function as a microkernel-based hypervisor, virtualizing Linux guests as unprivileged, isolated component to enable code and functionality reuse. True to the microkernel principles, seL4 itself does not provide a fully-fledged VM but only primitives that allow the construction of a VM. To that end, seL4 provides two object types: virtual address space (VSpace) and a vCPU execution abstraction as shown in Fig. 10. An seL4 VSpace is used to provide the memory environment for a thread (seL4 Thread Control Object (TCB)), in that it provides a container into which memory objects can be placed. A vCPU extends the user-level context provided by a thread with the privileged execution context used by the guest kernel. When seL4 dispatches a thread with an associated vCPU, which itself is linked to a VSpace, it resumes execution in the VM context instead of a user context. On a fault, e.g., as a result of an access to non-mapped address in the VSpace or an exception generating instruction like an SMC, seL4 stops the thread, synthesizes a fault IPC, and delivers it to a fault handler. After handling the fault, the fault handler resumes the vCPU execution.

A VM is managed by a so-called Virtual Machine Monitor (VMM), a regular user-level component without special privileges. The VMM activities can be broadly categorized as follows:
- setup: allocating resources such as RAM, initializing the VM, loading the guest OS image, device initialization and mapping e.g., guest interrupt controller (vGIC [25]).
- run-time management: handling guest faults arising from the interaction with virtual devices, implementing virtual devices, injecting virtual interrupts.

In an embodiment, during the VM setup, the VMM creates a VM child process, allocates the seL4 TCB and vCPU objects based on the specified number of vCPUs for that machine. The next step is to announce the available devices to the guest and this is done through the use of Device Tree Blobs (DTBs). DTBs are essentially a list of device nodes available in the system with each node carrying information on the type of the device, its location in memory and any other device-specific information. The VMM generates the DTB matching to the set of devices it initialized and loads it into the guest VSpace. The last step to configure the VM is to configure the primary vCPU entrypoint, which sets the correct initial vCPU context (platform and OS specific). To start the VM, VMM starts the primary vCPU and signals to seL4 that it should swich execution to the VM vCPU. The initial boot process is always done on the primary (v)CPU and the guest OS is responsible to start all other vCPUs as specified in the DTB.

The seL4 setup may be extended with OP-TEE security services. In particular, an Arm TrustZone (TZ) functionality may be added to the system. Therefore, some issues may be considered.
1) In TrustZone, the NW (Linux OP-TEE driver in the Linux kernel) and the SW (OP-TEE OS) cannot invoke services directly. Instead, the need to pass through the EL3 Secure Monitor facilitated SMC instructions, that trap into EL3. The Secure Monitor then ensures that the execution resumes at an appropriate entrypoint in the other world.
2) In the process of a TrustZone world switch, the memory access permissions have to be reconfigured. When executing in the SW, all memory is accessible. Execution in the NW cannot access memory exclusively assigned to the SW.

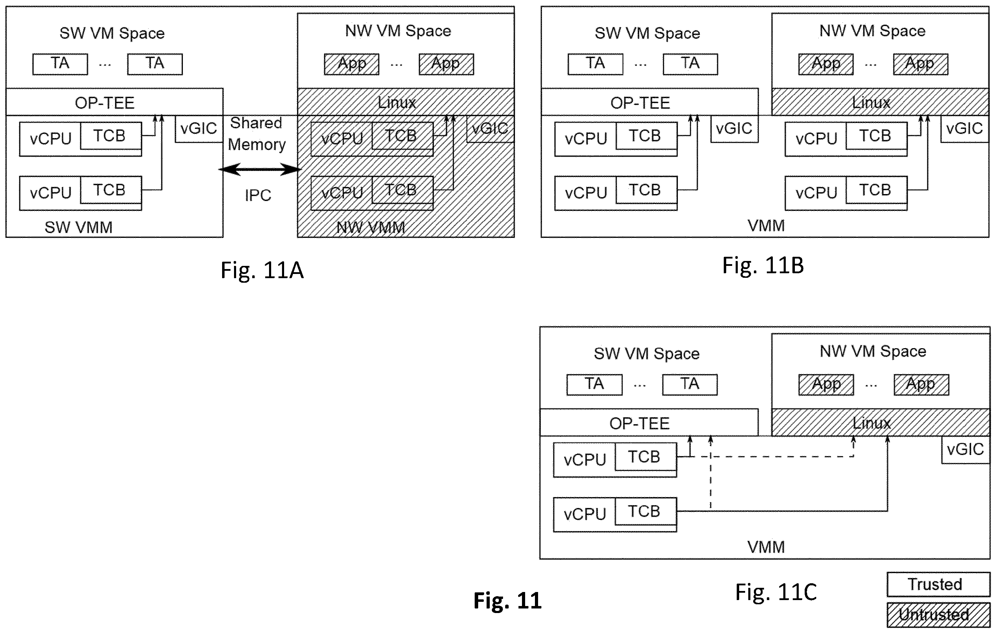

It may be determined how much of the VM components should be shared between the SW and NW. Several design paths may be considered as shown in Fig. 11. The design choices for providing a virtualized and isolated SW may be summarised as using two different VM and VMMs and their seL4 infrastructure (Fig. 11A), sharing one VMM and using separate VMs and interrupt controllers (vGIC) (Fig. 11B) and sharing both the VM and VMM, providing separations through different VSpaces (Fig. 11C). The directional lines in the figure represent the VSpace association with a VM vCPU with a full line representing current use, and dashed line representing association but not current use.
1) Complete separation of the SW and NW into separate VMs with separate VMMs. This approach may be imagined as running two VM and two VMM processes. The SW VM can map the entirety of the NW memory and both VMMs could communicate through shared memory or seL4 IPC to ensure context switching and SMC handling (Fig. 11A).
2) Semi-complete separation of the SW and NW into separate VMs with a single VMM. This approach could be imagined as running two VM in one VMM process. Running two VMs from a single VMM means that two sets of vCPUs with their matching TCBs, interrupt controllers and memory devices may be provided. The communication between these VMs may be done through the shared VMM (Fig. 11B).
3) Minimal separation of the SW and NW with one VM and one VMM. This approach is the closest to the Arm TrustZone design. The worlds share CPUs but each CPU can only be used by one of the worlds at the same time. However, the available mechanisms in this option (one VM, one VMM) may not fully provide isolation of these two worlds, thus this option may include an additional solution for SW/NW isolation (Fig. 11C).

Option 1 allows the most code reuse of the existing base system at the cost of the most complex transitions between the SW and NW. Both option 1 and 2 use separate interrupt controllers, which offers easy separation of interrupt handling but raises the problem of interrupt controller synchronization and their effect on interrupt latencies. Option 3 is the most similar to Arm TrustZone and shows the most promise for integrating Arm TrustZone ecosystem solutions like OP-TEE.

In Option 3, however, it may be challenging leveraging existing mechanisms for world separation. The standard way of providing component isolation in seL4 is through the use of VSpaces. By adding a second SW VSpace to Option 3, as shown in (Fig. 11C), an Arm TrustZone-like solution may be achieved.

In an embodiment, the following features may also be implemented.

World Isolation: seL4 provides a way for providing component isolation through the use of VSpaces. By providing a second VSpace to the VM and mapping all of the VM components to SW and NW VSpaces, memory access privileges similar to that of Arm TrustZone may be achieved. The NW VSpace remains unchanged, it contains allocations for the guest OS images, DTBs, devices etc. However, the new SW VSpace is privileged and has access to the entire system, that is to all memory (regions) allocated to the VM, including that owned by the TEE. This may be achieved by allocating and mapping a new memory region for the OP-TEE OS to the SW VSpace. This is considered part of the SW VSpace secure memory. Furthermore, the SW VSpace is expanded with access to the non-secure memory of the NW by mapping in all of the memory that is contained in the NW VSpace. This way, the asymmetric view of the memory that matches the Arm TrustZone architecture is achieved - the SW has access to the whole VM memory, while the NW has access to only the non-secure parts.

vCPU World Transition: A Secure Monitor world may be replicated switch by saving all of the vCPU/TCB state on each transition. Since seL4 maintains and restores the vCPU stage, only four seL4 syscalls need to be leveraged for saving and restoring the vCPU context. seL4 ARM VCPU ReadReg and seL4 ARM VCPU WriteReg for manipulating the vCPU system registers and seL4 TCB ReadRegisters and seL4 TCB WriteRegisters for manipulating the vCPU (TCB) general-purpose registers. On each transition, these syscalls may be used to save the current and load the previous vCPU state into the seL4 vCPU object with the updated entrypoint address and any modifications to other vCPU registers necessary.

SMC Handling: During runtime, the VMM handles all guest faults: traps registered during initialization of the VM (e.g., vGIC configuration accesses) or exceptions (e.g., virtual interrupt injection or trapping instructions like SMCs). Since transitions between the SW/NW are triggered by SMCs, the Arm TrustZone interface may be replicated in the VMM SMC handler.

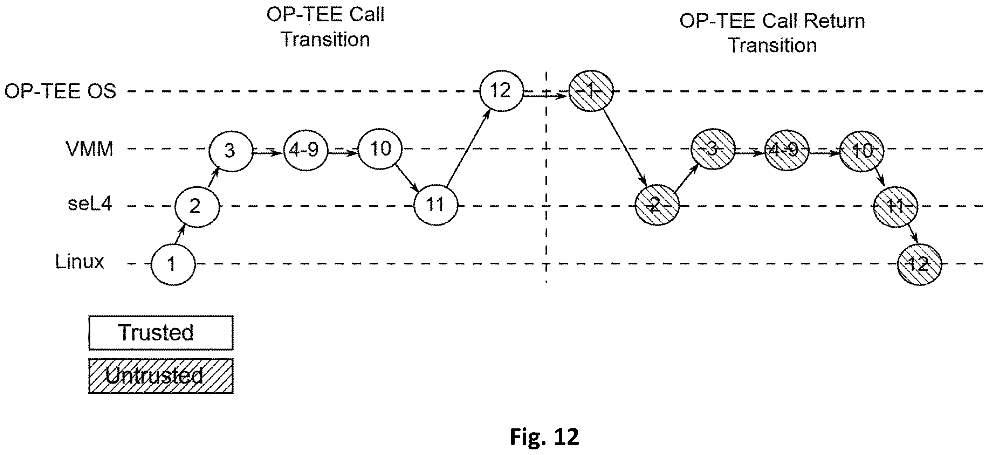

Fig. 12 shows a representation of the steps done to handle an SMC issued by the NW to request execution in the SW ("Trusted") and the same steps when the SW requests the return of execution to the NW (dashed, "Untrusted").

As shown in Fig. 12, during guest VM execution, a guest can request a transition between SW/NW by executing an SMC instruction (step 1). The hypervisor traps SMCs into EL2 by setting the HCR EL2.TSC configuration register and the SMC call will be delivered to seL4 (step 2). seL4 forwards the fault as exception IPC to the VMM, together with the information about the fault (step 2). Upon receiving the fault, the VMM decodes the fault according to the SMCCC [20]. SMCs that come from or target the SW are delivered to the OP-TEE SMC handler (step 3). The handler, then, checks which VSpace was attached to the vCPU during the last execution to determine whether the source was SW or NW (step 4) and whether OP-TEE was successfully initialized (step 5). Depending on the result of previous two checks, the SMC handler has to handle four cases (step 6):
1) the SMC source was the NW and OP-TEE was initialized. In this case, the SMC handler needs to check whether the SMC is of type fast or yielding and set the SW entrypoint to the matching OP-TEE exception vector. Registers X0-X7 are passed along to OP-TEE as call parameters.
2) the SMC source was the SW and OP-TEE was initialized. In this case, OP-TEE is returning from an operation and the NW entrypoint does not change from its previous vCPU state. Register X0 - X4 (some cases just X0) are passed along to NW as return parameters.
3) the SMC source was the SW and OP-TEE was not initialized. In this case, OP-TEE is returning from its initialization and the NW entrypoint is the Linux kernel entrypoint. Register X0 contains the value of the OP-TEE exception vector table and is saved for later use.
4) Invalid SMC.

In case the SMC is invalid, only the Program Counter (PC) is incremented; otherwise, the SMC handler executes the context switch by (step 7):
1) saving the current vCPU state into the appropriate (SW or NW) data structure and increments its PC (to step over the exception instruction).
2) restoring the saved target vCPU state from the appropriate (SW or NW) data structure and updating the PC and registers based on the branch of execution it took.

Lastly, the SMC handler resumes the vCPU, marking the fault handled (step 8) and returns information to the VMM which VSpace is to be run after VM is resumed (step 9). The VMM then sets the proper VSpace to the TCB and signals to seL4 to schedule the VM vCPU for execution (step 10). seL4 then loads the modified vCPU state into the pCPU and executes the VM with the target VSpace (step 11). Fig. 12 shows this process when the SMC is issued in the NW 1 to execute an OP-TEE call in the SW (step 12) and the same process when OP-TEE uses an SMC to signal success and request a return to the NW (steps 1 - 12, dashed circles).

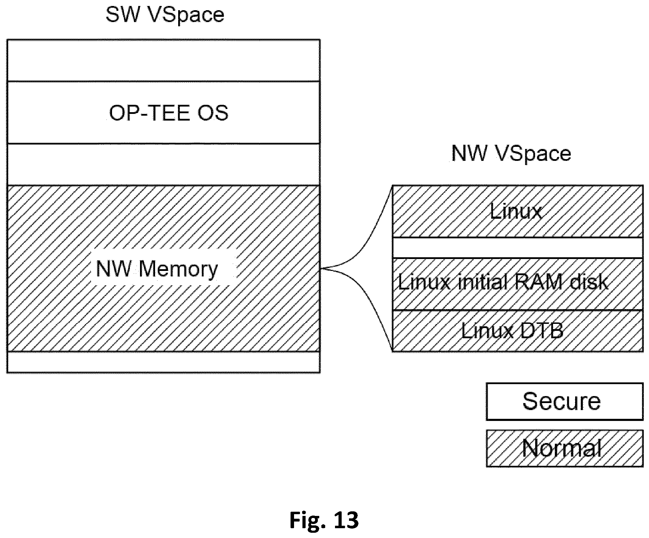

Fig. 13 shows the SW and NW VSpaces populated. The NW VSpace may contain the Linux image, initial RAM Disk and DTB, while the SW VSpace may contain everything mapped to the NW VSpace with the addition of OP-TEE OS.

OP-TEE Boot Procedure: The following refers to virtualizing the OP-TEE OS alongside a Linux guest. While the above was concerned about the world transition process, this passage is focused on ensuring the correct functionality of the SW/NW interface. For this purpose, a memory area for OP-TEE may be allocated and mapped in the VM secure memory, just before the Linux image, as shown in Fig. 13, and the OP-TEE image may be loaded as part of the VM setup. The last step is to update the Linux DTB specifying that OP-TEE is available in the system. As ATF boots the SW software before NW software, this is performed in the embodiment by setting the VM primary vCPU entrypoint to the OP-TEE entrypoint.

To reduce the adaption effort, the QEMU Armv8 platform has been selected, which due to the platform's simplicity, required minimal changes to its configuration:
- Changing the OP-TEE secure RAM location and size to match the design.
- Changing the default debug serial device.
- Changing the default address of the interrupt controller.
- Using the Arm GICv2 controller instead of Arm GICv3.
- Disabling the OP-TEE feature that allows OP-TEE to announce itself in the NW DTB.

After OP-TEE has successfully booted, it issues an SMC with its exception vector table address and Linux is ready to be booted. During boot process, Linux will read the OP-TEE device node from the provided DTB, load the OP-TEE driver and execute a handshake with OP-TEE to finish the initialization process. If Linux has the entire OP-TEE framework installed (OP-TEE Client, OP-TEE supplicant and optional OP-TEE TAs), the virtualized Linux has complete access to OP-TEE functionality with changes only made to OP-TEE QEMU configuration files of 29 insertions and 7 deletions. The changes to the base system were in total 2002 insertions and 491 deletions.

Interrupt Handling: The last part of the design is related to interrupt handling. As secure devices are an optional feature for the SW, this will not be explicitly dealt with. Since OP-TEE may be configured to use Arm GICv2 interface of the interrupt controller, OP-TEE expects secure interrupts to be delivered only as Fast Interrupt Requests (FIQs) [25] which effectively disables interrupts for the SW. This may be done because:
1) GICv3 fully supports software using it as GICv2 [25].
2) Since it is run in the NW only no FIQs will ever be delivered to the VM, making their handling unnecessary.

This ensures, that all devices shared by the SW and NW (e.g., debug serial console) have their interrupts handled in the NW. If SW only devices are assigned to OP-TEE it runs correctly without ever receiving an interrupt. This limitation can be solved, by making changes to the virtual interrupt controller (vGICv3) to handle secure interrupts based on the VSpace currently associated with the vCPU.

While current seL4-based virtualization systems offer good security and safety properties, they do not provide TrustZone-compatible security services to virtualized guests. In this disclosure, an improved secure execution environment has been proposed.

In a particular example, the disclosure proposes a TEEVseL4, a TrustZone-compatible virtualization system leveraging the strengths of the seL4 microkernel, that can provide security services to the Linux guests based on the dynamic, scalable and flexible Trusted Computing Base of an seL4 system. A high-level performance benchmarking shows that TEEVseL4 can provide security services with acceptable overheads (less than 20%) when compared to a native TrustZone system, making it an attractive option for platforms with multiple, mutually-distrustful virtualized guests.

The system of the present disclosure provides a dynamic memory allocation for TEE and REE and is thus scalable and thus flexibly applicable. A plurality of VMs may be provided with respective TEEs and REEs. Moreover, each VM may comprises a plurality of TEEs. The separation of TEEs may further improve security since the execution of applications can be further separated.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

### List of References

[1] S. Jero, J. Furgala, R. Pan, P. K. Gadepalli, A. Clifford, B. Ye, R. Khazan, B. C. Ward, G. Parmer, and R. Skowyra, "Practical Principle of Least Privilege for Secure Embedded Systems," in 2021 IEEE 27th Real-Time and Embedded Technology and Applications Symposium (RTAS), 2021.
[2] M. M. Madden, "Challenges Using Linux as a Real-Time Operating System," in AIAA Scitech 2019 Forum. San Diego, California: American Institute of Aeronautics and Astronautics, Jan. 2019.
[3] GlobalPlatform, Inc., "TEE System Architecture v1.3 - GPD SPE 009," Tech. Rep. GPD SPE 009, May 2022.
[4] M. Sabt, M. Achemlal, and A. Bouabdallah, "Trusted Execution Environment: What It is, and What It is Not," in 2015 IEEE Trust-com/BigDataSE/ISPA, vol. 1, Aug. 2015, pp. 57-64.
[5] S. Pinto and N. Santos, "Demystifying Arm TrustZone: A Comprehensive Survey," ACM Computing Surveys, vol. 51, no. 6, 2019.
[6] P. Jauernig, A.-R. Sadeghi, and E. Stapf, "Trusted Execution Environments: Properties, Applications, and Challenges," IEEE Security & Privacy, vol. 18, no. 2, pp. 56-60, Mar. 2020.
[7] S. Pereira, J. Sousa, S. Pinto, J. Martins, and D. Cerdeira, "Bao-Enclave: Virtualization-based Enclaves for Arm," Sep. 2022.
[8] Z. Hua, J. Gu, Y. Xia, H. Chen, B. Zang, and H. Guan, "vTZ: Virtualizing ARM TrustZone," in USENIX security symposium, 2017.
[9] S. Mirzamohammadi and A. A. Sani, "The Case for a Virtualization-Based Trusted Execution Environment in Mobile Devices," in Proceedings of the 9th Asia-Pacific Workshop on Systems, 2018.
[10] U. Steinberg and B. Kauer, "NOVA: A microhypervisor-based secure virtualization architecture," in Proceedings of the 5th European Conference on Computer Systems, 2010.
[11] M. Hamad, J. Schlatow, V. Prevelakis, and R. Ernst, "A communication framework for distributed access control in microkernel-based systems," in 12th Annual Workshop on Operating Systems Platforms for Embedded Real-Time Applications (OSPERT16), 2016.
[12] M. Crone, "Towards attack-tolerant trusted execution environments: Secure remote attestation in the presence of side channels," Master's thesis, AaltoUniversity, 2021.
[13] M. Hohmuth, M. Peter, H. Härtig, and J. S. Shapiro, "Reducing TCB size by using untrusted components: Small kernels versus virtual-machine monitors," in Proceedings of the 11th Workshop on ACM SIGOPS European Workshop, 2004.
[14] G. Heiser, "The seL4 Microkernel - An Introduction," p. 32.
[15] "The Fiasco microkernel - Overview," https://os.inf.tu-dresden.de/fiasco/.
[16] E. de Matos and M. Ahvenjärvi, "seL4 Microkernel for Virtualization Use-Cases: Potential Directions towards a Standard VMM," Electronics, vol. 11, no. 24, p. 4201, Jan. 2022.
[17] "About OP-TEE - OP-TEE documentation documentation," https://optee.readthedocs.io/en/latest/general/about.html.
[18] Arm Limited, "ARM Power State Coordination Interface," Tech. Rep., Jun. 2021.
[19] --, "Software Delegated Exception Interface (SDEI)," Tech. Rep. ARM DEN 0054C, Jan. 2023.
[20] --, "SMC Calling Convention (SMCCC)," Tech. Rep. ARM DEN 0028E, May 2022.
[21] M. M. Quaresma, "TrustZone based Attestation in SecureRuntime Verification for Embedded Systems," 2020.
[22] Arm Limited, "Learn the architecture - AArch64 virtualization," Tech. Rep. 0100-03, Jun. 2022.
[23] K. Sandström, A. Vulgarakis, M. Lindgren, and T. Nolte, "Virtualization technologies in embedded real-time systems," in 2013 IEEE 18th Conference on Emerging Technologies & Factory Automation (ETFA), 2013.
[24] M. S. Miller, K.-P. Yee, and J. Shapiro, "Capability Myths Demolished."
[25] Arm Limited, "Learn the architecture - Arm Generic Interrupt Controller v3 and v4," Tech. Rep. 198123 0302 00 en, Dec. 2021.
[26] "Remote Attestation With Tpm2 Tools," https://tpm2-software.github.io/2020/06/12/Remote-Attestation-With-tpm2-tools.html, Jun. 2020.
[27] H. Raj, S. Saroiu, A. Wolman, R. Aigner, J. Cox, P. England, C. Fenner, K. Kinshumann, J. Loeser, D. Mattoon, M. Nystrom, D. Robinson, R. Spiger, S. Thom, and D. Wooten, "fTPM: A Software-only Implementation of a TPM Chip."
[28] "Home - tpm2-tools," https://tpm2-tools.readthedocs.io/en/latest/.
[29] "TPM 2.0 Library," https://trustedcomputinggroup.org/resource/tpm-library-specification/.
[30] "Virtualization - OP-TEE documentation documentation," https://optee.readthedocs.io/en/latest/architecture/virtualization.html.
[31] W. Li, Y. Xia, L. Lu, H. Chen, and B. Zang, "TEEv: Virtualizing trusted execution environments on mobile platforms," in Proceedings of the 15th ACM SIGPLAN/SIGOPS International Conference on Virtual Execution Environments, 2019.
[32] F. Brasser, D. Gens, P. Jauernig, A.-R. Sadeghi, and E. Stapf, "SANCTUARY: ARMing TrustZone with User-space Enclaves," in Proceedings 2019 Network and Distributed System Security Symposium, 2019.
[33] Borna Blazevic, Michael Peter, Mohammad Hamad, Sebastian Steinhorst, "TEEVseL4: Trusted Execution Environment for Virtualized seL4-based Systems", to be published

## Claims

1. System for providing a secure environment, the system comprising at least one processor, wherein the at least one processor is configured to:
provide a system kernel,
provide at least one virtual machine, VM,
wherein the system kernel is configured to control at least one virtual machine monitor, VMM,
wherein the VMM is configured to control at least one Trusted Execution Environment, TEE, in the at least one VM and a Rich Execution Environment, REE, in the at least one VM and to provide communication between the at least one TEE and the at least one VM and between the REE and the at least one VM, and
wherein each TEE comprises a trusted operating system, trusted OS, and at least one trusted application.

2. System according to claim 1, wherein each TEE is configured to communicate with other TEEs and the REE.

3. System according to any one of claims 1 or 2, wherein the VMM is an unprivileged entity with respect to system components except for one VM of the at least one VM, and/or
wherein, the VMM is configured to provide a virtual device management, and/or
wherein the VMM is configured to control a plurality of TEEs in the at least one VM.

4. System according to any one of claims 1 to 3, wherein the VMM is configured to provide a separate runtime environment for the TEE and the REE, respectively, and/or
wherein the VMM is configured to provide a coordinated initialisation procedure compliant with security objectives for the TEE and the REE, respectively,
wherein preferably, the initialisation procedure is combined with a boot procedure executed in a coordinated manner.

5. System according to any one of claims 1 to 4, wherein one or more memory range(s) is statically allocated to each TEE and the REE, respectively.

6. System according to any one of claims 1 to 5, wherein one or more memory range(s) is dynamically allocated to each TEE and the REE, respectively.

7. System according to any one of claims 1 to 6, wherein the VMM is configured to control at least one virtual Central Processing Unit, VCPU.

8. System according to any one of claims 1 to 7, wherein a memory range of the TEE is configured not to be accessible by the REE, and
wherein a memory range of the REE is configured to be accessible by the TEE.

9. System according to any one of claims 1 to 8, wherein the processor is configured to execute the VM in a normal state or in a secure state.

10. System according to claim 9, wherein the VMM is configured to control the at least one VCPU to selectively run in a normal state or a secure state,
wherein in the normal state, a memory region of the VM is divided into a normal memory region and a secure memory region, wherein the VCPU is only configured to access the normal memory region, and/or
wherein in the secure state, the VCPU is configured to access all memory regions of the VM.

11. System according to any one of claims 1 to 10, wherein the system kernel is a micro kernel, and/or
wherein the processor is further configured to provide fine-grain access control for components of the system based on object capabilities.

12. System according to any one of claims 1 to 11, wherein the processor is configured to provide a plurality of VMs, wherein the VMs are decoupled from one another such that the VMs are independently and repeatably instantiable and/or bootable.

13. System according to any one of claims 1 to 12, wherein the processor is configured to perform a transition from the TEE to the REE or the REE to the TEE in the system kernel using the VMM, or
wherein the processor is configured to perform a transition from the TEE to the REE or the REE to the TEE in the system kernel without the VMM.

14. System according to any one of claims 1 to 13, wherein the processor is configured to dynamically reconfigure the system,
wherein preferably, the dynamic reconfiguration comprises at least one of component creation, destruction, resource reclamation for future use, reconfiguration, privileges control, access control, memory allocation, or bandwidth allocation.

## Patentansprüche

1. System zum Bereitstellen einer sicheren Umgebung, wobei das System wenigstens einen Prozessor umfasst, wobei der wenigstens eine Prozessor ausgelegt ist zum:
Bereitstellen eines Systemkernels,
Bereitstellen wenigstens einer virtuellen Maschine, VM, wobei der Systemkernel dafür ausgelegt ist, einen Virtual Machine Monitor, VMM, zu steuern,
wobei der VMM dazu ausgelegt ist, wenigstens eine Trusted Execution Environment, TEE, in der wenigstens einen VM und eine Rich Execution Environment, REE, in der wenigstens einen VM zu steuern und Kommunikation zwischen der wenigstens einen TEE und der wenigstens einen VM sowie zwischen der REE und der wenigstens einen VM bereitzustellen, und
wobei jede TEE ein vertrauenswürdiges Betriebssystem, vertrauenswürdiges OS, und wenigstens eine vertrauenswürdige Anwendung umfasst.

2. System gemäß Anspruch 1, wobei jede TEE dafür ausgelegt ist, mit anderen TEEs und der REE zu kommunizieren.

3. System gemäß einem der Ansprüche 1 oder 2, wobei der VMM eine unprivilegierte Entität in Bezug auf Systemkomponenten mit Ausnahme einer VM der wenigstens einen VM ist und/oder
wobei der VMM dafür ausgelegt ist, eine Verwaltung für virtuelle Vorrichtungen bereitzustellen, und/oder wobei der VMM dafür ausgelegt ist, mehrere TEEs in der wenigstens einen VM zu steuern.

4. System gemäß einem der Ansprüche 1 bis 3, wobei der VMM dafür ausgelegt ist, eine separate Laufzeitumgebung für die TEE bzw. die REE bereitzustellen, und/oder
wobei der VMM dafür ausgelegt ist, eine koordinierte Initialisierungsprozedur bereitzustellen, die mit den Sicherheitszielen für die TEE bzw. die REE im Einklang steht,
wobei vorzugsweise die Initialisierungsprozedur mit einer koordiniert ausgeführten Boot-Prozedur kombiniert wird.

5. System gemäß einem der Ansprüche 1 bis 4, wobei jeder TEE bzw. der REE ein oder mehrere Speicherbereich(e) statisch zugewiesen wird/werden.

6. System gemäß einem der Ansprüche 1 bis 5, wobei jeder TEE bzw. der REE ein oder mehrere Speicherbereich(e) dynamisch zugewiesen wird/werden.

7. System gemäß einem der Ansprüche 1 bis 6, wobei der VMM dafür ausgelegt ist, wenigstens eine virtuelle Central Processing Unit, VCPU, zu steuern.

8. System gemäß einem der Ansprüche 1 bis 7, wobei ein Speicherbereich der TEE dafür ausgelegt ist, für die REE nicht zugänglich zu sein, und
wobei ein Speicherbereich der REE dafür ausgelegt ist, für die TEE zugänglich zu sein.

9. System gemäß einem der Ansprüche 1 bis 8, wobei der Prozessor dafür ausgelegt ist, die VM in einem normalen Zustand oder in einem sicheren Zustand auszuführen.

10. System gemäß Anspruch 9, wobei der VMM dafür ausgelegt ist, die wenigstens eine VCPU so zu steuern, dass sie wahlweise in einem normalen Zustand oder in einem sicheren Zustand läuft,
wobei im normalen Zustand ein Speicherbereich der VM in einen normalen Speicherbereich und einen sicheren Speicherbereich unterteilt ist, wobei die VCPU nur dafür ausgelegt ist, auf den normalen Speicherbereich zuzugreifen, und/oder
wobei im sicheren Zustand die VCPU dafür ausgelegt ist, auf alle Speicherbereiche der VM zuzugreifen.

11. System gemäß einem der Ansprüche 1 bis 10, wobei der Systemkernel ein Mikrokernel ist und/oder
wobei der Prozessor ferner dafür ausgelegt ist, eine feinkörnige Zugriffskontrolle für Komponenten des Systems basierend auf Objektfähigkeiten bereitzustellen.

12. System gemäß einem der Ansprüche 1 bis 11, wobei der Prozessor dafür ausgelegt ist, mehrere VMs bereitzustellen, wobei die VMs voneinander entkoppelt sind, so dass die VMs unabhängig und wiederholbar instanziierbar und/oder bootfähig sind.

13. System gemäß einem der Ansprüche 1 bis 12, wobei der Prozessor dafür ausgelegt ist, einen Übergang von der TEE zur REE oder von der REE zur TEE im Systemkernel mithilfe des VMM durchzuführen, oder
wobei der Prozessor dafür ausgelegt ist, einen Übergang von der TEE zur REE oder von der REE zur TEE im Systemkernel ohne den VMM durchzuführen.

14. System gemäß einem der Ansprüche 1 bis 13, wobei der Prozessor dafür ausgelegt ist, das System dynamisch umzukonfigurieren,
wobei das dynamische Umkonfigurieren vorzugsweise mindestens eines der folgenden umfasst: Komponentenerstellung, -zerstörung, Rückgewinnung von Ressourcen für die künftige Verwendung, Umkonfiguration, Berechtigungskontrolle, Zugriffskontrolle, Speicherzuweisung oder Bandbreitenzuweisung.

## Revendications

1. Système de fourniture d'un environnement sécurisé, le système comprenant au moins un processeur, dans lequel l'au moins un processeur est configuré pour :
fournir un noyau de système,
fournir au moins une machine virtuelle, VM,
dans lequel le noyau de système est configuré pour commander au moins un moniteur de machine virtuelle, VMM, dans lequel le VMM est configuré pour commander au moins un environnement d'exécution sécurisé, TEE, dans l'au moins une VM et un environnement d'exécution riche, REE, dans l'au moins une VM et assurer la communication entre l'au moins un TEE et l'au moins une VM, ainsi qu'entre le REE et l'au moins une VM, et
dans lequel chaque TEE comprend un système d'exploitation sécurisé, OS sécurisé, et au moins une application sécurisée.

2. Système selon la revendication 1, dans lequel chaque TEE est configuré pour communiquer avec d'autres TEE et le REE.

3. Système selon l'une quelconque des revendications 1 ou 2, dans lequel le VMM est une entité non privilégiée par rapport à des composants de système sauf pour une VM de l'au moins une VM, et/ou
dans lequel le VMM est configuré pour assurer une gestion de dispositif virtuel, et/ou
dans lequel le VMM est configuré pour commander une pluralité de TEE dans l'au moins une VM.

4. Système selon l'une quelconque des revendications 1 à 3, dans lequel le VMM est configuré pour fournir un environnement d'exécution séparé pour le TEE et le REE, respectivement, et/ou
dans lequel le VMM est configuré pour fournir une procédure d'initialisation coordonnée conforme à des objectifs de sécurité du TEE et du REE, respectivement, dans lequel de préférence la procédure d'initialisation est combinée avec une procédure d'amorçage exécutée de manière coordonnée.

5. Système selon l'une quelconque des revendications 1 à 4, dans lequel une ou plusieurs plages de mémoire sont attribuées statiquement à chaque TEE et au REE, respectivement.

6. Système selon l'une quelconque des revendications 1 à 5, dans lequel une ou plusieurs plages de mémoire sont allouées dynamiquement à chaque TEE et à la REE, respectivement.

7. Système selon l'une quelconque des revendications 1 à 6, dans lequel le VMM est configuré pour commander au moins une unité centrale de traitement virtuelle, VCPU.

8. Système selon l'une quelconque des revendications 1 à 7, dans lequel une plage de mémoire du TEE est configurée pour ne pas être accessible par le REE, et dans lequel une plage de mémoire du REE est configurée pour être accessible par le TEE.

9. Système selon l'une quelconque des revendications 1 à 8, dans lequel le processeur est configuré pour exécuter la VM dans un état normal ou sécurisé.

10. Système selon la revendication 9, dans lequel le VMM est configuré pour commander à l'au moins une VCPU de fonctionner sélectivement dans un état normal ou dans un état sécurisé,
dans lequel dans l'état normal, une région de mémoire de la VM est divisée en une région de mémoire normale et une région de mémoire sécurisée, dans lequel la VCPU est configurée uniquement pour accéder à la région de mémoire normale, et/ou
dans lequel, dans l'état sécurisé, la VCPU est configurée pour accéder à toutes les régions de mémoire de la VM.

11. Système selon l'une quelconque des revendications 1 à 10, dans lequel le noyau de système est un micro-noyau, et/ou
dans lequel le processeur est configuré en outre pour assurer une commande d'accès à granulation fine pour des composants du système sur la base de capabilités d'objets.

12. Système selon l'une quelconque des revendications 1 à 11, dans lequel le processeur est configuré pour fournir une pluralité de VM, dans lequel les VM sont découplées les unes des autres de telle sorte que les VM soient instanciables et/ou amorçables indépendamment et à plusieurs reprises.

13. Système selon l'une quelconque des revendications 1 à 12, dans lequel le processeur est configuré pour réaliser une transition du TEE vers le REE ou du REE vers le TEE dans le noyau de système à l'aide du VMM, ou dans lequel le processeur est configuré pour réaliser une transition du TEE vers le REE ou du REE vers le TEE dans le noyau de système sans le VMM.

14. Système selon l'une quelconque des revendications 1 à 13, dans lequel le processeur est configuré pour reconfigurer dynamiquement le système,
dans lequel la reconfiguration dynamique comprend de préférence au moins une création de composant, destruction, récupération de ressource en vue d'un usage ultérieur, reconfiguration, commande de privilèges, commande d'accès, allocation de mémoire ou allocation de largeur de bande.
